# EUROPEAN PATENT APPLICATION

(11) **EP 4 775 350 A1**
(43) Date of publication of application: **15.07.2026**
(21) Application number: 25150657.2
(22) Date of filing: 08.01.2025
(51) Int. Cl.: B24B 3/58, B23D 63/00, B23D 63/12, B24B 49/12, B24B 53/07, B24B 53/095, B24D 3/00, B24D 5/10, B24B 55/02

(54) **METHODS OF PROFILE SHARPENING THE TEETH OF A BAND SAW BLADE; GRINDING HEADS AND PROFILE SHARPENING MACHINE FOR USE IN THE METHODS**

(71) Applicant: Luja Hansen, Soren, 5000 Odense C (DK)
(72) Inventor: Luja Hansen, Soren, 5000 Odense C (DK)
(74) Representative: Patrade A/S

(57) **Abstract**

Methods of profile sharpening the teeth of a band saw blade comprise the steps of a) providing a grinding tool having at least one grinding head configured; b) arranging the rotation axis of the at least one grinding head at an angle in relation to a base line of the band saw blade; c) defining an insertion angle of the grinding head between an insertion direction of the grinding head and a line perpendicular to the base line of the band saw blade, which insertion angle is different from at least one hook angle of the tooth face of the at least one tooth, and displacing the at least one grinding head along the insertion direction into a space between two adjacent teeth of the band saw blade to achieve a grinding start position; and d) operating the grinding tool to grind at least the tooth face of the at least one tooth by continuing displacing the grinding head in the insertion direction. Grinding heads and a profile sharpening machine for use in the methods are provided.

## Description

The present invention relates to methods of profile sharpening at least one tooth of the teeth of a band saw blade, in particular to sharpen teeth having a tooth face with several tooth face parts arranged at different hook angles.

The methods of the present invention is particular suited for profile sharpening teeth of wide band saw blades, of e.g. 25 - 360 mm, where the width of the band saw blade is defined as the nominal dimension measured from the tip of the tooth to the base line of the band. The width of the band saw blade is also the height of of the band saw blade.

Band saw blades can become dull over time, reducing their efficiency and accuracy. To keep bands saw productive and efficient in the long run, and prolong their lifespan, the teeth of the band saw blade must be sharpened at regular interval to thereby obtain consistent cutting quality.

To be sharpened the band saw blade needs to be removed from the band saw and re-mounted once having been sharpened. The band saw is inoperative during such maintenance of the band saw blade, so to save production costs it is important that the sharpening process is as fast a possible without compromising the quality of the band saw blade.

Existing profile sharpening machines typically start the grinding process at the top of the tooth and move the grinding head in a cycle to grind the entire tooth profile - either along the tooth profile or across the tooth profile. Common to known profile sharpening methods is also that the grinding face of the grinding head is inserted at an insertion angle being the same as the hook angle.

The hook angle is defined as the angle between a tooth face and a line perpendicular to a baseline of the saw blade. The hook angle is thus the amount of forward or backward lean of a tooth.

It is a main aspect of the present invention to make sharpening of band saw blades fast and efficient.

It is a further aspect of the present invention to provide a profiles sharpening method that is suited for grinding a band saw blade tooth having a tooth face with just one hook angle, as well as being suited for grinding tooth faces having several tooth face parts at same or different hook angles.

It is a further aspect of the present invention to provide a profile sharpening method that can grind substantially all surfaces of a tooth simultaneously, and without adjusting the angle of the grinding surface(s) of the grinding head to grind the whole tooth.

These aspects and other aspects are achieved according to the present invention by means of a method of profile sharpening at least one tooth of teeth of a band saw blade, which method comprises the steps of
a) providing a grinding tool having at least one grinding head configured with a grinding profile with at least one grinding surface part,
b) arranging the rotation axis of the at least one grinding head at an angle ≥ 0 in relation to a base line of the band saw blade,
c) selecting an insertion direction of the grinding head, which insertion direction provides an insertion angle of the grinding head in relation to a line perpendicular to the base line of the band saw blade, which insertion angle is different from at least one hook angle of the tooth face of the at least one tooth to be ground and/or obtained, and displacing the at least one grinding head, either along the insertion direction or perpendicular to the width of the band saw blade, into a space between two adjacent teeth of the band saw blade to achieve a grinding start position, and
d) operating the grinding tool to grind at least the tooth face of the at least one tooth by continuously displacing the grinding head in the insertion direction.

In step b) the rotation axis of the at least one grinding head is arranged at an angle ≥ 0 in relation to a base line of the band saw blade, thus the rotation axis and the base line can be parallel or not parallel.

In step c) the grinding head arrives at the grinding starting point at the bottom of said space in various ways, either along the insertion direction, or is inserted from the side of the band saw blade, crosswise the band saw blade, thus perpendicular to the width of the base band saw blade. In the following this "grinding starting point", which is just before the grinding profile physically engages the band saw blade to actually start grinding, will be referred to as the "0 position".

According to step c) the at least one grinding head with its at least one grinding surface part is arranged at an insertion angle above or next to the tooth to be ground, and the grinding profile of the grinding head is gradually moved towards the "0 position" by displacing the at least one grinding head into a space between two adjacent teeth of the band saw blade to thereby achieve the grinding start position. Once the grinding head has reached the "0 position" the grinding tool starts to grind at least the tooth face of the at least one tooth by continuously displacing the grinding head in the insertion direction, irrespective of how the grinding head arrived at the "0 position".

In known grinding methods the grinding head needs to be moved along 3 axes: length, depth and angle. Engagement between the grinding head and the tooth starts as soon as the grinding head hits the top of the tip of the tooth and continues either until the grinding head reaches the bottom of the gullet, or until the grinding head has moved over the entire tooth profile, depending on how much of the tooth that needs to be sharpened. By means of known methods 6 - 10 full teeth are sharpened per minute.

In contrast in the "offset technology" of the method of the present invention the grinding head is arranged between adjacent teeth before actual grinding starts, and material can be removed from the entire tooth profile in the same single grinding step without having to change insertion direction, whereby grinding time can be reduced substantially, such as about 50-70%. In the "offset technology" the grinding head need not be moved along the curvature of the tooth profile in order to grind the tooth face, gullet and tooth back.

For the method of the present invention the insertion angle is different from at least one hook angle. The insertion angle and the insertion direction need not be adjusted during the actual grinding of a tooth. The grinding head only needs to move along 2 axes, length (X-axis) and depth (Y-axis). The insertion angle and the insertion direction is the same during steps c) and d) of the method. Thus the insertion angle and the insertion direction are fixed throughout grinding the entire tooth profile. As a result the profile sharpening by means of the method of the present invention can be performed much faster than hitherto known as the grinding profile of the grinding head need not be moved, turned or rotated to conform to the different curvatures of a tooth to be ground.

The appropriate grinding angle is selected in step b) and the appropriate insertion direction is selected in step c), so that any tooth face profile can be made, whether it being a tooth profile having a tooth face with just one hook angle or a tooth profile having a tooth face composed of sections with different hook angles. The grinding angle between the rotation axis and the grinding head and the insertion angle between the insertion direction of the grinding head and the base line of the band saw blade can be selected according to need to provide and desirable hook angle(s) to band saw blades.

Thus by means of the method of the present invention a multiplicity of various tooth profiles can be obtained and be ground, including known tooth profiles as well as the novel tooth profiles described in the applicant's co-filed European application no. EP25150618.4, and entitled "A band saw blade with a novel tooth and a method of grinding same".

Such novel tooth profiles can be comprise
- a tip with a free tip edge, and a tooth face, which tip extends via a gullet into a tooth back of the subsequent tooth,
- the tip comprises a first section with a first tooth face part of the tooth face), and a second section with a second tooth face part the tooth face,
- the first tooth face part has a first hook angle and the second tooth face part has a second hook angle, which second hook angle is different from the first hook angle or
- the first tooth face part has a first hook angle and the second tooth face part has a curvature that at least partly undercuts the first tooth face part
- preferably the second tooth face part and the first tooth face part are offset each other by at least one intermediate step.

According to the present invention the profile sharpening of the teeth of a band saw blade can be made in a single step without altering the insertion direction and the grinding angle. When the grinding head is moved in the insertion direction, the movement in the x-axis direction serves to grind the tooth face, and the movement in the y-axis direction serves to grind the gullet and the tooth back of the subsequent tooth. Conveniently grinding can be obtained by using a CNC machine to move the grinding tool.

As a comparative example of the grinding efficiency of known profile sharpening methods: To achieve a hook angle of 27° the insertion angle is fixed at 27°.

If a hook angle of 27° is made by means of the "offset technology" of some methods of the present invention the insertion angle of the grinding head is selected in step b) to be higher than 27°, e.g. 37°, to thereby facilitate the displacing of step c) of the grinding profile of the grinding head into the space between adjacent teeth, without hitting any part of these teeth prior to the grinding profile is at the "0 position". As an at least one hook angle of 27°, not 37°, is the intended target hook angle the insertion direction is chosen to compensate therefore. The chosen compensation, thus the insertion angle being higher than the at least one hook angle, is decisive of the ratio between the x-axis displacement towards the tooth face and the y-axis displacement deeper into the tooth, where this compensation also is indicative of how much material is removed from the tooth. As the insertion direction and the insertion angle is set and fixed prior to step d), the ratio between how much material that is ground off the tip of the tooth and the width of the saw blade can be controlled.

As the insertion angle and the insertion direction of the grinding head in the methods of the present invention does not correspond to the at least one hook angle it has become possible to grind higher hook angles than hitherto known, including hook angles that is higher than 40°. By means of the novel methods of the present invention it is possible to very fast sharpen e.g. a tooth face having two different positive hook angles where the free tip edge (the wood fiber breaking point) of the tip of the tooth protrudes substantially beyond the plane of the second hook angle. The afore-mentioned insertion angles and hook angles are just examples of how to sharpen high hook angles of teeth of band saw blades using the methods of the present invention by initially selecting an insertion angle that is higher than the intended target hook angle.

Within the scope of the present invention the term "high" or "low", when used in relation to an angle, refers to the size of an angle. A high angle may e.g. be > 40°, and a low angle be < 30°.

The insertion direction may in a simple embodiment be along a straight line, however the insertion direction can also follow a curvature, but without changing the insertion angle, where the term curvature refers to the degree to which a curve or surface deviates from being a straight line or a flat plane.

According to the method of the first embodiment of the invention there is no grinding contact in the "0 position" between the grinding head and the band saw blade before said grinding head has been fully inserted into the space between adjacent teeth of the band saw blade and is displaced further in the insertion direction against the tooth face and inside the gullet, to grind both tooth face, gullet and tooth back.

By means of conventional profile sharpening technologies only a small part of a tooth surface is in contact with the grinding head, resulting in a rather long grinding duration and grinding cycle for a tooth. In the "offset" technology of the present invention the whole tooth profile is ground at the same time, making the grinding cycle much shorter.

Heat produced during grinding of a metal part may change the crystalline structure of the metal, e.g. steel may get a martensitic structure. Due to the selected insertion angle and selected insertion direction, whereby no material is ground off prior to step d), rotation of the at least one grinding head can be started prior to, during, or once said grinding head has been fully inserted into the space between adjacent teeth of the band saw blade. Thereby the applied grinding force on the band saw blade is reduced substantially compared to known methods. Less heat is produced in the metal of the band saw blade during grinding, and the risk of the metal changing crystalline structure is substantially eliminated due to smaller grinding force over longer time.

The grinding tool may comprise plural grinding heads arranged spaced apart on a common rotation axis, and with a spacing that matches the distance between adjacent teeth of the band saw blade to be sharpened, to thereby further save grinding time, optionally sharpen different faces or parts of faces of a tooth. Said plural grinding heads may be identical to grind a sequence of identical teeth, but said plural grinding heads can in alternative embodiments be different and selected to grind a sequence of different teeth, or different parts of the sequence of teeth. By means of the method of the present invention the teeth of band saw blades can be provided with any top profile, tooth height and tooth pitch. All kinds of tooth top profiles are within the scope of the present invention, and the teeth of the band saw blade that is ground may be the same or different, and be combinations of teeth in any desired order and sequence.

The at least one grinding surface part may be configured complementary to at least a part of the tooth face to be provided to the tooth, so produce a corresponding tooth face part, e.g. a tooth face part similar to a tooth face part of the previous tooth profile, in a single grinding step without having to change the insertion direction and the insertion angle.

The method of the present invention is particular suited for grinding teeth of a band saw blade, wherein the teeth is of the kind having several different tooth faces at different hook angles, such as embodiments of teeth wherein the tooth face of the at least one tooth to be ground can have
- at least a first tooth face part with a first hook angle, and
- a second tooth face part with a second hook angle being different from the first hook angle.

The first tooth face part may be the outmost free tip part that initially attacks the work piece, and the second tooth face part be provided below the first tooth face part closer to the base line of the band saw blade. Optionally the planes of the first tooth face part and of the second tooth face part are different. An intermediate step may offset said planes from each other. In some tooth embodiments the second tooth face part can however extend directly from the first tooth face part. Some tooth embodiments may have plural tooth face parts in direct extension of each other, or offset each other due to interposed intermediate steps.

Advantageously the methods of the present invention can not just grind high hook angles, such as hook angles higher than 40°, but also any other complex or simple patterns, orders and/or sequences of tooth face parts, intermediate steps and undercuts if present in the tooth profile to be ground and/or obtained. Of course hook angles lower than 40° can also be sharpened using the methods of the present invention.

In the method of profile sharpening teeth of a band saw blade step c) may comprise the partial steps of
c1) inserting the at least one grinding head in a closest non-grinding contact with the at least one tooth to be ground, and
c2) advancing the at least one grinding head further in the insertion direction to apply a grinding force to the tooth face,
to thereby remove material from the band saw blade to obtain the target tooth profile.

When the grinding head is displaced in step c2) and the grinding tool is operated in step d) the previous tooth profile is ground off and the new tooth profile reveals. In this respect it should be noted that the methods of the present invention can be used to provide a band saw blade with the same kind of tooth profile as previously, as well as an entirely new kind of tooth profile different from the previous.

Several re-profilings of tooth faces of a band saw blade can be made as long as the base of the band saw blade does not become instable when subsequently being used.

Advantageously the methods of the present invention can be computer-controlled or computer-assisted. Suitable software programs that run on the computer can be operated via a user interface to input data and control the grinding process. Input data for a tooth profile may include insertion angle, insertion direction and grinding depth. The grinding depth of the grinding head can be set in accordance with the band saw material intended to be ground off the band saw blade to obtain a new sharp target tooth profile.

The methods of the present invention can also implement a vision system, preferably a camera vision system, to monitor that the tooth is sharpened correctly. During carrying out the methods of the present invention the vision control monitors that the teeth become sharp and keep the required measurements. In the event of a wrong grinding result, the machine can automatically correct or simply stop the grinding process to allow the operator to evaluate if adjustments are required, e.g. change the target depth of the grinding head. At the end of the grinding process the vision system can generate a report that identifies the teeth that do not comply with the measurements and provide suggestions for a new depth that gives the desired sharpness.

The operator of a profile sharpening machine is often the source of errors, and by making the methods of the present invention fully automatic, such as by implementing computer control and/or computer-assistance and/or vision technology the number of actions that the operator(s) need(s) to perform are substantially reduced and so are the errors.

The method of the present invention can be used in profile sharpening of any kind of teeth of band saw blade, including band saw blade with known teeth, such as teeth with known top profiles. The methods of the present invention can be used for sharpening band saw blade having teeth with different tooth profile, band saw blades with different sequences of identical tooth profiles, as well as for sharpening of different tooth heights and saw blades of different tooth pitch. This list is not to be considered exhaustive. Further processes and methods can be carried out on the band saw blade before or after having carried out the methods of the present invention. E.g. the methods of the present invention can be combined with any methods of top grinding, gullet polishing and side grinding if needed, using known methods, known apparatuses, and known machinery.

The present invention also relates to various embodiments of grinding heads configured with grinding profiles suited for grinding teeth of band saw blades. The teeth can have one or more tooth face parts, and in case of several tooth face part these can have different hook angles. The grinding heads of the present invention is particular suited for performing the method of the present invention.

The embodiments of grinding heads of the present invention is of the kind having at least one grinding surface part adapted for grinding at least one tooth of a band saw blade, which at least one tooth has a least one hook angle. Such a grinding head has a main body wherein at least a part of the grinding profile is shaped complementary to the tooth profile to be obtained; optionally the main body is solid or is configured as a hollow shell member.

It may be preferred that the complementary grinding profile of the grinding head is obtained by an annular exterior surface of a main body of the grinding head having one or more of
- a front grinding face adapted for grinding a first tooth face part of the at least one tooth of a band saw blade,
- an outmost annular grinding rim for grinding the second tooth face part of the at least one tooth of a band saw blade,
- an annular grinding part for grinding an intermediate step of the at least one tooth of a band saw blade, and
- a rear annular grinding part for grinding the gullet and/or the tooth back of a subsequent tooth of the teeth of the band saw blade.

A band saw blade is made of metal and the grinding forces produce thermal heat that inexpediently is absorbed by band saw blade. To reduce this disadvantage the grinding head may have integral cooling properties.

Such cooling properties can be obtained in different ways, e.g. by the shell member delimiting an annular coolant compartment around a shaft coupling. The annular coolant compartment can advantageously be configured for receiving a coolant via coolant passages that traverse a circumferential wall of the shaft coupling 36, and thereby utilize an already existing structural feature as a supply channel for coolant.

The annular coolant compartment can be open at the front of the grinding head, so that the annular coolant compartment can receive coolant which is brought into rotation by the rotating grinding head and thrown by the centrifugal force onto the band saw blade. In an alternative embodiment the grinding head can be open at the back to receive coolant in its annular coolant compartment to cool down the grinding head, optionally also throwing said coolant onto the band saw blade due to the centrifugal force.

In the methods of the present invention actual grinding is not started before the grinding head is in the closest possible contact with the band saw blade without actually grinding it. Under such circumstances it can be difficult to provide sufficient amounts of coolant to the interface between the band saw blade and the grinding head. This challenge is solved by the present invention by providing the exterior surfaces of the main body of the grinding head with a plurality of dimples, recesses, dents or cavities that gives space for the coolant, and also makes space for debris and matter ground off the band saw blade, so that said debris and matter can be continuously removed during grinding.

Sufficient amount of coolant can also be provided to the band saw blade in embodiments of grinding heads where the shell member has a plurality of through holes.

The above embodiments of grinding heads with annular coolant compartment, with the plurality of dimples, recesses, dents or cavities, and plurality of through holes of the shell member can be combined in a multitude of different ways. E.g. can a grinding head in form of a shell member with annular coolant compartment also have through holes and/or an exterior surface with the plurality of dimples, recesses, dents or cavities.

The present invention also relates to a profile sharpening machine comprising the grinding heads described above for carrying out the methods described above.

The inventions will now be described in further details with references to the drawing, wherein
Fig. 1 shows a prior art method of grinding a teeth of a band saw blade, where the teeth have a tooth profile with one hook angle,
Fig. 2 is a comparative view showing the method seen in fig. 1 implemented at a band saw blade with teeth having tooth faces with two hook angles,
Fig. 3 illustrates step b) of a first embodiment of a method of the present invention using a first embodiment of a grinding head,
Fig. 3a is an enlarged scale view of the encircled fragment of fig. 3,
Figs. 4 - 6 illustrate step c1) of the first embodiment of a method of the present invention,
Figs. 7 - 8 illustrate step c2) and d) of the first embodiment of a method of the present invention,
Fig. 9 is an enlarged scale view of the encircled fragment of fig. 7,
Fig. 10 is an enlarged scale view of the encircled fragment of fig. 8,
Figs. 11 illustrates step b) of a second embodiment of a method of the present invention, using a second embodiment of a grinding head,
Fig. 11a is an enlarged scale view of the encircled fragment of fig. 11,
Fig. 12 is a fragment of the view of fig. 11,
Figs. 13 - 16 illustrate step c1) of the second embodiment of a method of the present invention,
Figs. 17 and 18 illustrate step c2) and d) of the second embodiment of a method of the present invention,
Fig. 19 is an enlarged scale view of the encircled fragment of fig. 17,
Fig. 20 is an enlarged scale view of the encircled fragment of fig. 18,
Fig. 21 illustrates step b) of a third embodiment of a method of the present invention, using a third embodiment of a grinding head,
Fig. 21a is an enlarged scale view of the encircled fragment of fig. 11,
Figs. 22 - 25 illustrate step c1) of the third embodiment of a method of the present invention,
Figs. 26 and 27 illustrate step c2) and d) of the third embodiment of a method of the present invention,
Fig. 28 is an enlarged scale view of the encircled fragment of fig. 26,
Fig. 29 is an enlarged scale view of the encircled fragment of fig. 27,
Fig. 30 is a perspective view of a combined grinding head being an assembly of a fourth embodiment of a grinding head and a fifth embodiment of a grinding head for use in a fourth embodiment of a method of the present invention,
Fig. 31 is a sectional perspective view taken along line XXX - XXX in fig. 30,
Fig. 32 shows the combined grinding head of fig. 30 in sectional view,
Fig. 32a is an enlarged scale view of the encircled detail to the left in fig. 32,
Fig. 32b is an enlarged scale view of the encircled detail to the right in fig. 32,
Fig. 33 shows the third embodiment of a grinding head in perspective seen from the front,
Fig. 34 is a sectional view of fig. 33 taken along line XXXIV - XXXIV in fig. 34,
Fig. 34a is an enlarged scale view of the encircled detail of fig. 34,
Fig. 35 is a perspective view of a sixth embodiment of a grinding head seen from the back,
Fig. 36 is a sectional view of fig. 35 taken along line XXXVI - XXXVI,
Fig. 37 is a perspective view of a seventh embodiment of a grinding head seen from the front,
Fig. 38 is a sectional view of fig. 35 taken along line XXXVIII - XXXVIII,
Fig. 39 is a perspective view of an eight embodiment of a grinding head seen from the front,
Fig. 40 is a sectional view of fig. 39 taken along line XL - XL,
Fig. 41 is a perspective view of an ninth embodiment of a grinding head seen from the front, and
Fig. 42 is a sectional view of fig. 41 taken along line XLII - XLII.

The teeth shown in the figures are examples of tooth profiles and hook angles that can be ground and sharpened using the methods of the present invention. These tooth profiles are shown for illustrative purposes and should not be deemed limiting of the scope of tooth profiles that can be profile-sharpened using the methods of the present invention.

The grinding profiles of the grinding heads shown in the figures are also examples. It is emphasized that the examples of teeth, grinding heads, and grinding profiles are presented to illustrate the versatility and the multitude of grinding options of the present inventions.

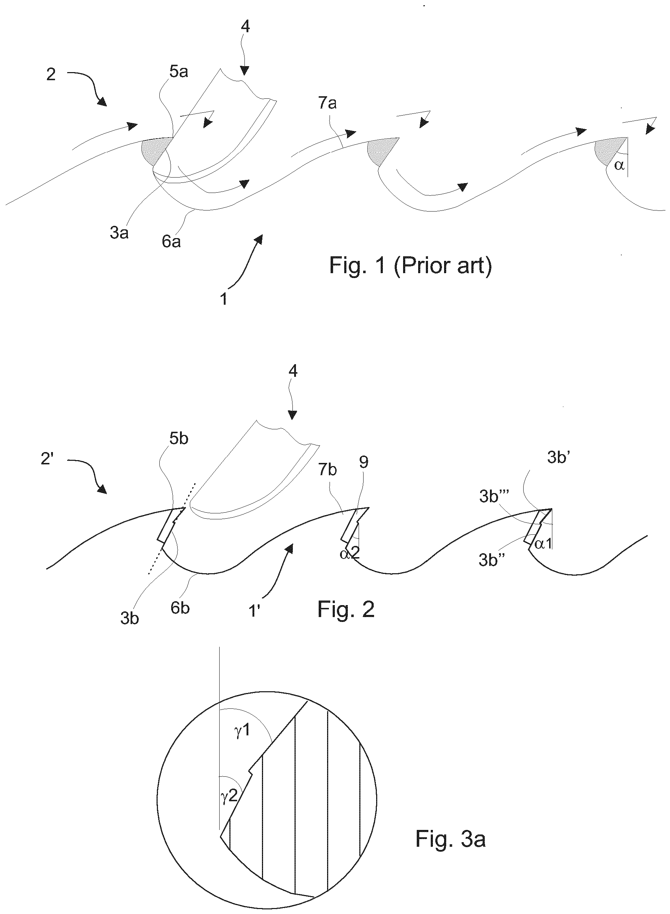

Fig. 1 shows a fragment of a conventional band saw blade 1a, having teeth 2. A tooth 2 has a tooth face 3a and one hook angle α. The grinding head 4 slides in grinding contact along the tooth face 3a from the tip edge 5a of the tooth 2 and moves along the curvature of the tooth profile, as shown with the arrows, along the gullet 6a and over the tooth back 7a of the subsequent tooth 2.

Fig. 2 is a comparative view where the method shown in fig. 1 is attempted used on a fragment of a band saw blade 1' with teeth 2', where a tooth 2' has a profiled tooth face 3b, a gullet 6b, a tooth back 7b, and a hard material tipping 9. The profiled tooth face 3b has an upper tooth face part 3b' and a lower tooth face part 3b'', which is offset the upper tooth face part 3b' by an intermediate step 3b'''. The two tooth face parts 3b', 3b" have different hook angles α1,α2, where α1>α2.

As fig. 2 illustrates: If the known profile sharpening method illustrated in fig. 1 and the grinding head 4 is displaced in grinding contact along the upper tooth face part 3b' it will grind off both the intermediate step 3b'' and the lower tooth face 3b'' and arrive to the tooth profile seen in fig. 1. If the grinding head 4 instead is angled to grind the lower tooth face 3b" the tip edge 5b of the tooth 2' will be cut off, as illustrated with the dotted line.

The novel methods of the present invention facilitate grinding teeth of any number of tooth face parts and any number of intermediate steps in a single grinding step.

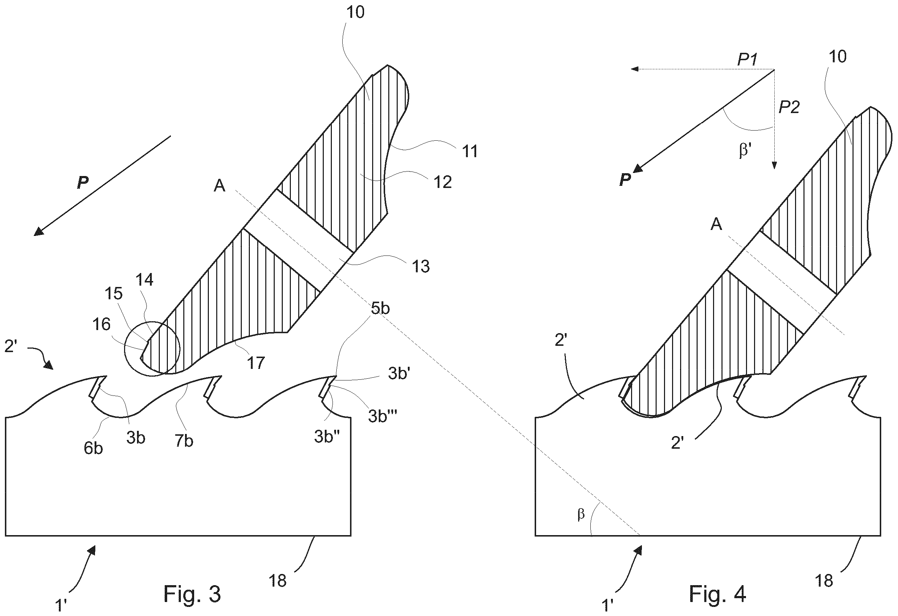

A first embodiment of a method of the present invention is illustrated schematically in figs. 3 - 8, wherein the intention is to re-profile the band saw blade 1' with same teeth 2' as previously.

Fig. 3 illustrates step a) of the first embodiment of a method of the present invention used on the band saw blade 1' seen in fig. 2. For like parts same reference numerals are used. A first embodiment of a grinding head 10 is arranged to perform step c), thus ready to be inserted in the insertion direction indicated by vector arrow ***P*** at an insertion angle β' in relation to a line perpendicular to the base line 18 of the band saw blade 1', which insertion angle β' is higher than the first hook angle α1. The vector quantity of vector ***P***, which represents the insertion force as well as the insertion direction, is illustrated by X-axis component *P1*, and Y-axis component *P2*. The X-axis component *P1* is responsible for grinding the tooth face 3b, and the Y-axis component P2 is responsible for grinding into the depth of the band saw blade 1'.

The exemplary grinding head 10 seen in figs. 3 - 8 is profiled to grind the tooth 2' seen in fig. 2 by having a grinding head profile shaped complementary to the tooth profile to be obtained. The annular exterior surface 11 of a main body 12 of the grinding head 10 that is intended to get into grinding contact with the tooth 2' to be ground is provided with an appropriate grinding material, e.g. diamond (not shown). Said grinding material may be the same on the entire grinding surface or be different depending on which part of the tooth profile to be ground. E.g. may the gullet only need polishing whereas the tooth face may need a rougher grinding to achieve desired sharpness and remove sufficient material.

The main body 12 has a shaft hole 13 to receive a rotation shaft (not shown) to rotate the grinding head 10 in operation about its rotation axis A. Instead of a shaft engaging the grinding head through a shaft hole, the shaft can be secured to the main body 12 by means of a flange (not shown), or be molded integral with the grinding head.

The annular exterior surface 11 of the main body 12 has a front grinding face 14 for grinding the first tooth face part 3b', an annular grinding part 15 for grinding the intermediate step 3b‴, an outmost annular grinding rim 16 for grinding the second tooth face part 3b", and a rear annular grinding part 17 for grinding the gullet 6b and the tooth back 7b of the subsequent tooth 2'.

For the first embodiment of a grinding head 10 its main body 12 resembles a trumpet-shape or cone-shape, but any main body shape including an annular exterior surface 11 complementary to the tooth profile to be obtained is within the scope of the present invention. The annular exterior surface 11 of the grinding head 10 is the male part that passes into the female curvature of the space or cavity between adjacent teeth 2'. Thus the surface parts of the main body 12 that takes part in the grinding of the tooth 2' has an outline curvature that matches the intended tooth profile. Said intended tooth profile can be the same as, or different from, the previous tooth profile.

As a first measure to remedy the insertion problems demonstrated in fig. 2 the rotation axis A of the grinding head 10 is in step b) arranged at an acute angle β in relation to the base line 18 of the band saw blade 1'. The insertion direction ***P*** of the grinding head 10 is selected so that the insertion angle β' of the grinding head is higher than the target first hook angle α1. The angles shown in figs. 3 - 8 are not to be construed as limiting the scope of the present invention, as such angles can depend on or be selected in accordance with machinery, target tooth profile and grinding head.

Having performed step b) the plane of the first tooth face part 3b' is parallel to the plane of the front grinding face 14, Said plane of the front grinding face 14 has a first grinding angle γ1 in relation to the base line 18 of the band saw blade 1' equal to α1, as seen in fig. 3a. γ1 = α1 can e.g. be 40°. The plane of the second tooth face part 3b'' is parallel to the plane of the annular grinding rim 16, which annular grinding rim 16 has a second grinding angle γ2 in relation to the base line 18 of the band saw blade 1' equal to α2, as seen in fig. 3a. γ2 = α2 can e.g. be 27°. The exemplary distance illustrated in the exemplary embodiment of step a) and step b) of the method according to the invention that the grinding head 10 needs to be displaced in the insertion direction ***P*** of step c) before it hits into grinding contact with the adjacent teeth 2' is 25 mm.

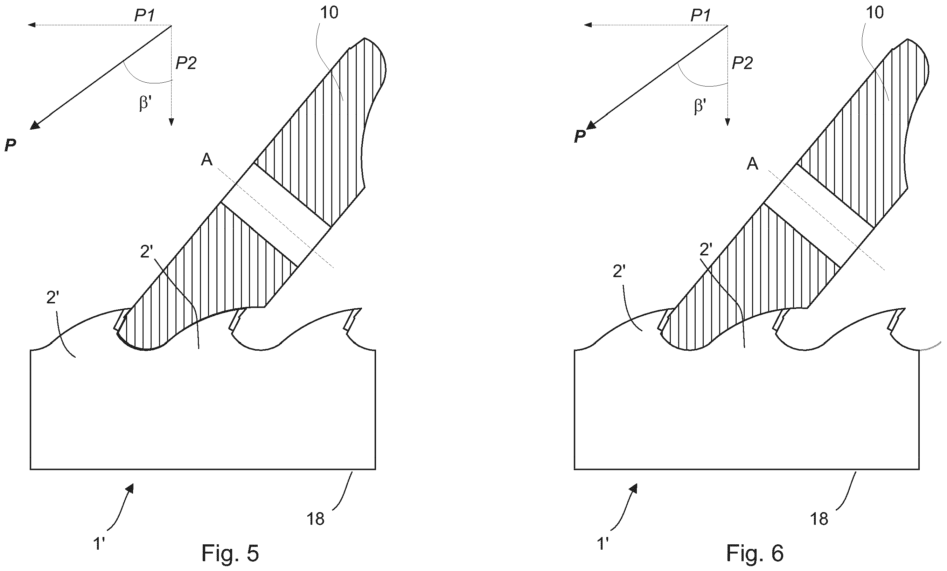

In step c1) seen in figs. 4 and 5 the grinding head 10 has been moved further forwards and downwards towards the saw blade 1' in the insertion direction ***P*,** and thereby brought very close, such at a distance of 1 mm and 0.5 mm, respectively, to the adjacent teeth 2' without grinding off any unintended material of at least the tooth face 3b of said teeth 2'. During displacing the grinding head 10 in the insertion direction ***P*** the grinding head 10 is moved both along the X-axis component *P1* and the Y-axis component P2 so that the grinding head 10 gets closer and closer to the surface to be ground, without actually grinding said surface, even if the grinding head 10 rotates. The grinding head 10 is finalizing step c1) towards and into the "0 position", as seen in fig. 6. In figs 4, 5 and 6 no grinding, or only inferior grinding off burrs, can take place, due to the minimal gap between adjacent teeth 2a and the annular exterior surface 11 of the grinding head 10.

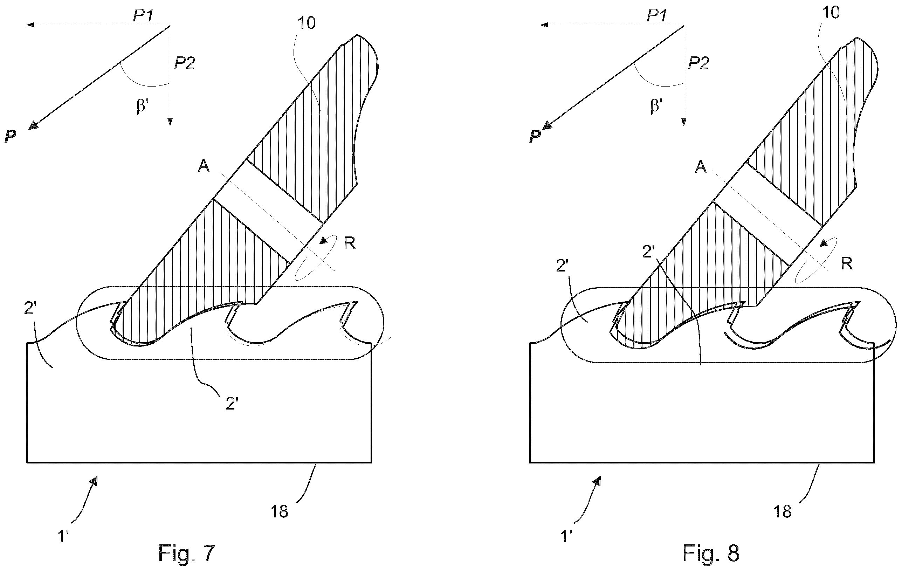

Figs. 7 and 8 show step c2) and d) wherein the rotating grinding head 10, indicated by arrow R, is displaced in the insertion direction ***P*** in grinding contact with the band saw blade 1' to grind, the teeth 2' in a single step to thereby grind the full tooth profile.

In fig. 7 the grinding head 10 has been forced 1.5 mm deeper into the band saw blade 1' due to the Y-axis displacement in direction *P2* and the X-axis displacement forward towards the tooth face 3b in the direction *P1*. In fig. 8 the grinding head 10 has been displaced further in a manner similar as described for fig. 7, and have been forced additional 1.5 mm deeper into the band saw blade 1', whereby the target tooth profile is obtained.

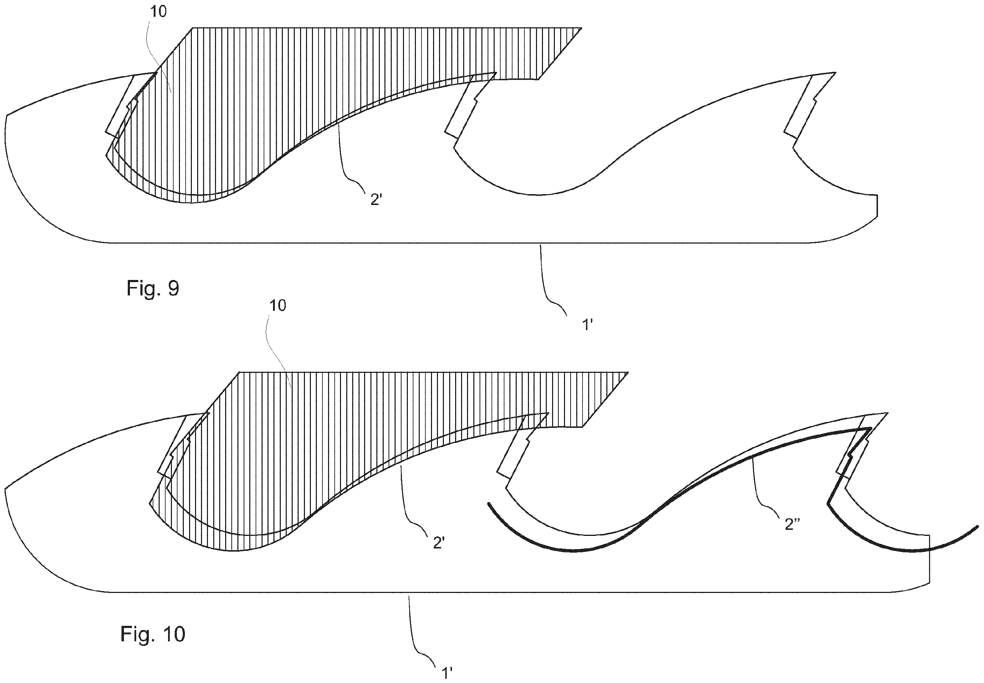

The result of step c2) and step d) is seen best in the enlarged scale view of figs. 9 and 10.

The amount of hatching to the left in fig. 9 of the fragment of the main body 12 of the grinding head 10 that overlaps the band saw blade 1' is smaller than the corresponding hatching seen in fig. 10, to illustrate the progressing of steps c2) and d) in which more and more material is ground off the band saw blade 1' to eventually reach the target profile illustrated with fat line to the right in fig. 10. To the right in fig. 10 the profile of the previous tooth 2' is for illustrative purposes shown "around" the target profile, to show the amount of material ground off the previous profile of the tooth 2' to get the re-profiled tooth 2", thus the target tooth.

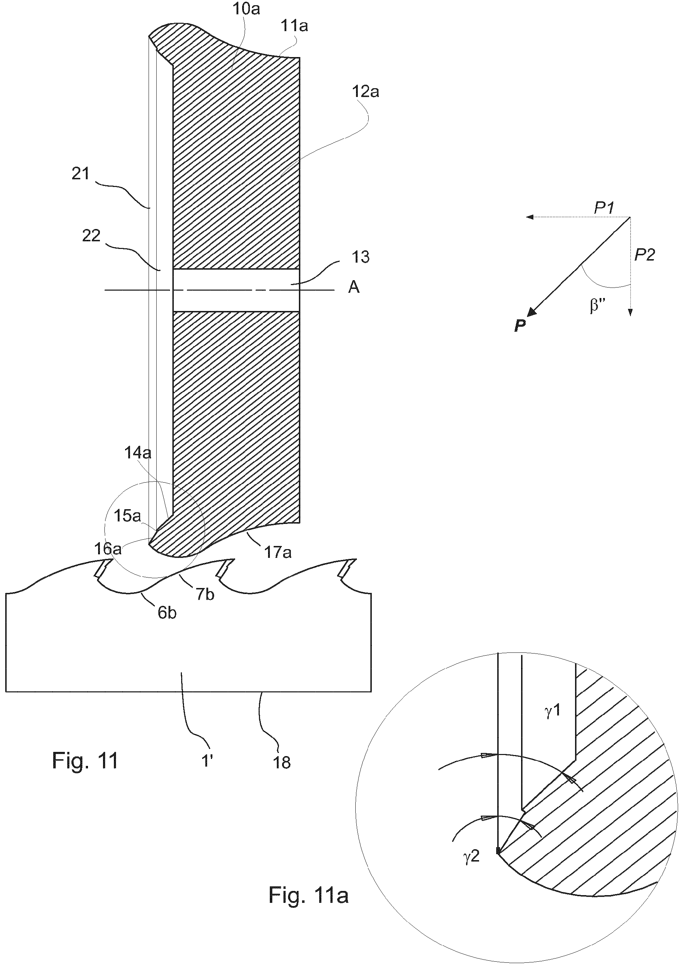

Fig. 11 illustrates step b) of a second embodiment of a method of the present invention, using a second embodiment of a grinding head 10a for profile sharpening the first embodiment of a band saw blade 1' to obtain the same tooth profile as described for the first embodiment of the method according to the present invention in relation to figs. 3 - 10. For parts having same function same reference numerals are used with the exception that the annotation "a" has been added to the reference numerals. For like parts same reference numerals are used.

The main body 12a has a shaft hole 13 to receive a rotation shaft (not shown) to rotate the grinding head 10a in operation about its rotation axis A, which rotation axis A is parallel to the base line 18 of the band saw blade 1'.

In step b) the insertion direction indicated by vector arrow ***P*** is at an insertion angle β" in relation to the rotation axis A, which insertion angle β'' is higher than the first hook angle α1.

The main body 12a of the second embodiment of a grinding head 10a has a rear annular grinding part 17a for grinding the gullet 6b and the tooth back 7b of the subsequent tooth 2'. The rear annular grinding part 17a has a curvature complementary to the curvature of the gullet 6b and the tooth back 7b.

The configuration of the second embodiment of a grinding head 10a differs from the first embodiment of a grinding head 10 in that the front grinding face 14a for grinding the first tooth face part 3b', the annular grinding part 15a for grinding the intermediate step 3b''', and the outmost annular grinding rim 16a for grinding the second tooth face part 3b'', respectively, are retracted from a front plane 21 of the main body 12a, due to the main body 12a having a central frontal cavity 22 surrounded by the front grinding face 14a, the annular grinding part 15a, and the outmost annular grinding rim 16a. The retraction of the front grinding face 14a, the annular grinding part 15a and the outmost annular grinding rim 16a allows the grinding head 10a to displaced in steps c2) and d) along the insertion direction ***P*** into grinding contact with the teeth 2'. Movement of the grinding head 10a can simply be obtained by connecting it to an X-Y table of a CNC machine.

Fig. 11a corresponds to fig. 3a and shows that the grinding angles γ1;γ2 of the front grinding face 14a and the outmost annular grinding rim 16a are the same as for the first embodiment of a grinding head 10.

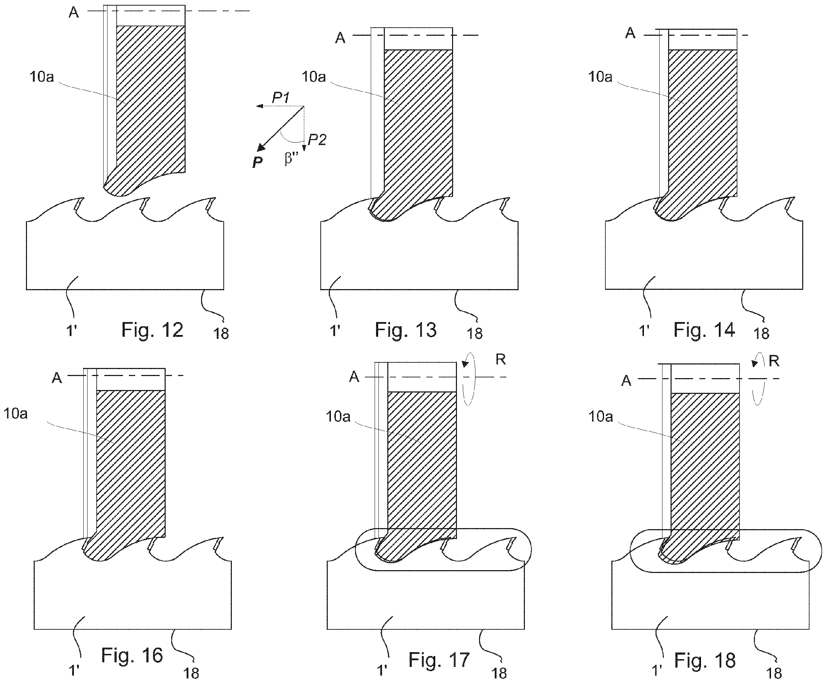

The second embodiment of the method according to the present invention is illustrated in smaller scale in figs. 12 - 18 that correspond to figs. 3 - 8, respectively.

In fig. 12 the grinding head 10a with its annular exterior surface 11a is in step a) in the same position as seen in fig. 11, with the lowermost point of the rear annular grinding part 17a spaced 25 mm above the deepest point of the gullet 6b. In figs. 13 and 14 of step c1) said space has been further reduced to 1.0 mm and 0.5 mm, respectively, by displacing the grinding head 10a in the insertion direction ***P***(*P1,P2*) until the "0 position" seen in fig. 16 is reached. In the "0 position" of fig. 16 the rear annular grinding part 17a is at the deepest point of the gullet 6b where it curves along the tooth back 7b, and is about to engage the tooth face 3b, but without grinding it.

Figs. 17 and 18 illustrate steps c2) and d) and the actual grinding process, during which the rotating grinding head 10a is displaced further forward along the X-axis by component *P1* of vector ***P*,** and deeper into the band saw blade along the Y-axis by component P2 of vector ***P*** to achieve the target tooth profile of the tooth 2" for the first embodiment of a method according to the present invention.

As seen in figs. 12 - 18 the rotation axis A moves closer and closer to the band saw blade and remains parallel to the base line 18 of the band saw blade 1' during steps b) - d).

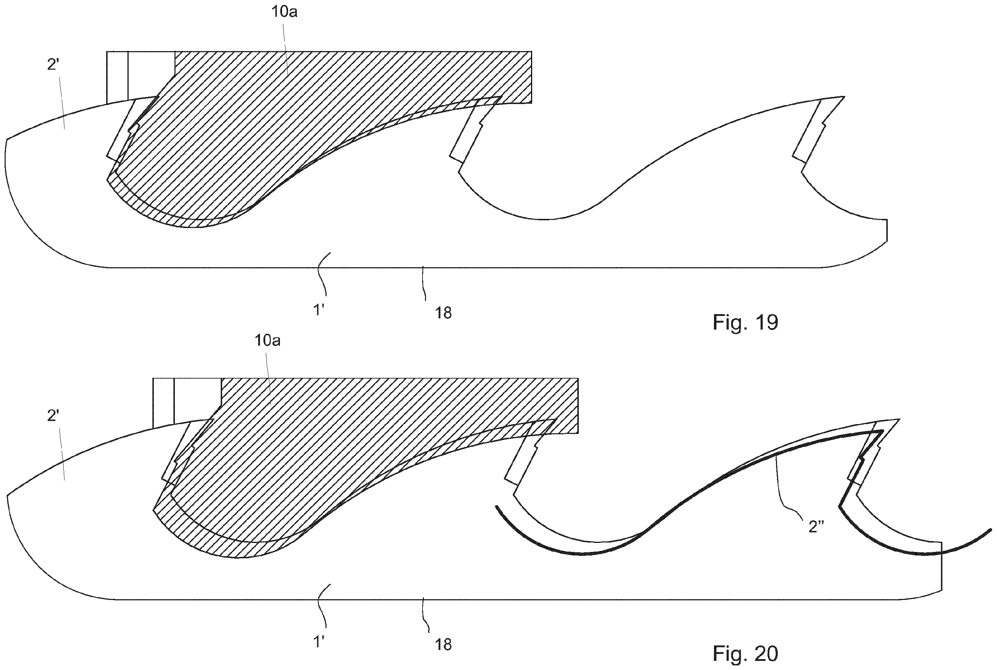

Figs. 19 and 20 illustrates step c2) and d) in enlarged scale views similar to the views of figs. 9 and 10 to illustrate the amount of material that is ground off the band saw blade 1', to achieve the new tooth profile of the tooth 2" indicated with fat line to the right in fig. 20.

The first embodiment of a method of the present invention utilizes a disc-shaped conical grinding head 10. As the grinding head 20 used in the second embodiment of a method of the present invention is arranged upright its conicity can be reduced.

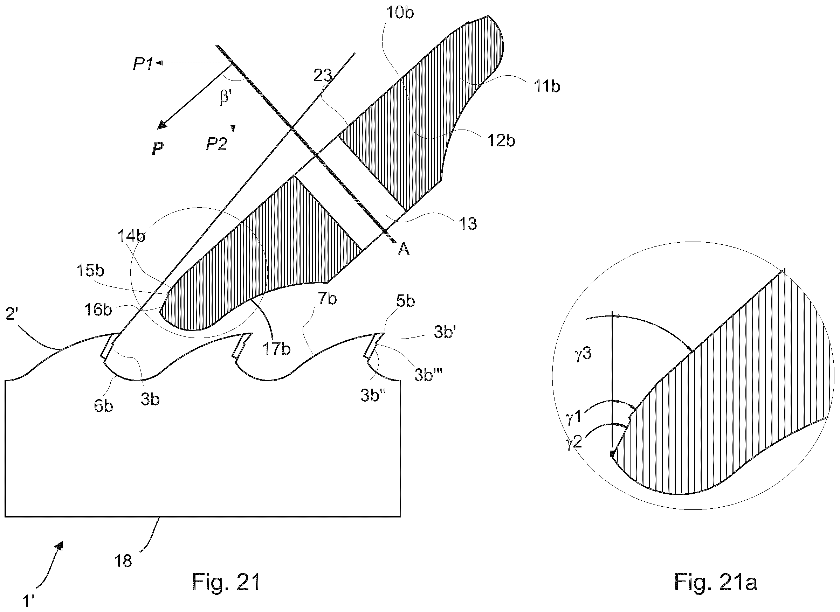

Fig. 21 illustrates step b) of a third embodiment of a method of the present invention, using a third embodiment of a grinding head 10b for profile sharpening the first embodiment of a band saw blade 1' to obtain the same tooth profile as described for the first embodiment of a method according to the present invention in relation to figs. 3 - 10, and described for the second embodiment of a method according to the present invention in relation to figs. 11 - 20. For parts having same function same reference numerals are used as for the first embodiment of a method according to the present invention with the first embodiment of a grinding head 10, with the exception that the annotation "b" has been added to the reference numerals. For like part same reference numerals are used.

In the third embodiment of a method of the present invention a conventional profile sharpening machine is used. Neither the insertion angle β' nor the grinding angle β between the base line 18 of the band saw blade 1' and the rotation axis A of the grinding head 10b cannot be adjusted/changed.

Therefore the design of the grinding head 10b has been added a further profile section as compensation, as seen best in the enlarged scale view of fig. 21a.

The grinding head 10b has a main body 12b with a front plane face 23 and an annular exterior surface 11b intended to get into grinding contact with the tooth 2' to be ground. The first grinding angle γ1 in relation to the base line 18 of the band saw blade 1' of the front grinding face 14b is equal to α1, e.g. 40°, and the second grinding angle γ2 in relation to the base line 18 of the band saw blade 1' of the outmost annular grinding rim 16b is equal to α2, e.g. 27°.

The front plane face 23 extends at a compensation angle from the front grinding face 14b, e.g. 8°, to thereby arrange the front plane face 23 of the grinding head 10b at a third grinding angle γ3 > γ2 > γ1. The insertion direction ***P*** is parallel to the front plane face 23.

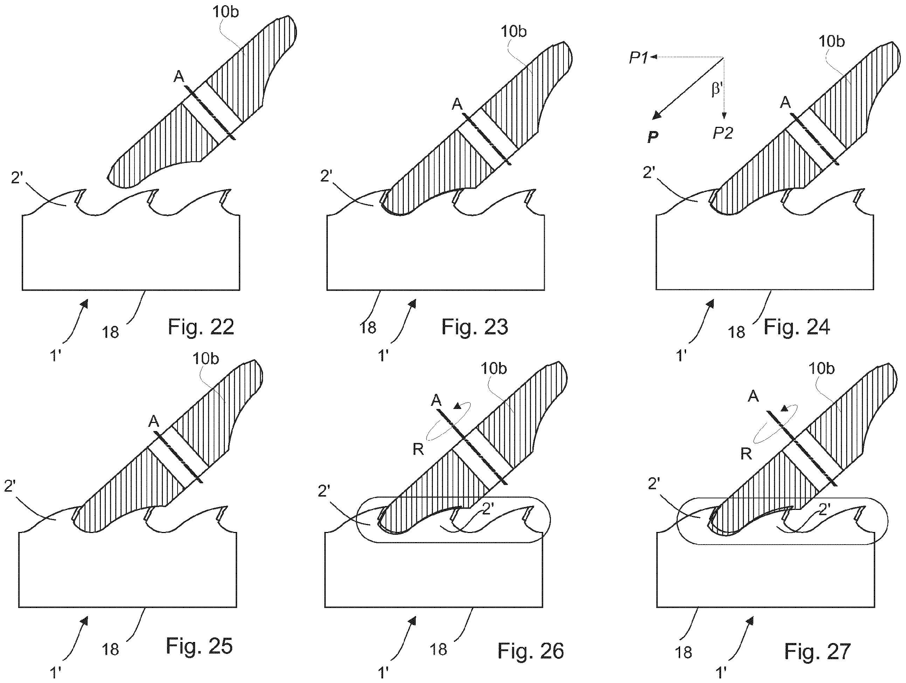

The steps of the third embodiment of the method according to the present invention is illustrated in figs. 22 - 27 that correspond to figs. 3 - 8, respectively, and to figs. 12 - 18, respectively, and will not be described again.

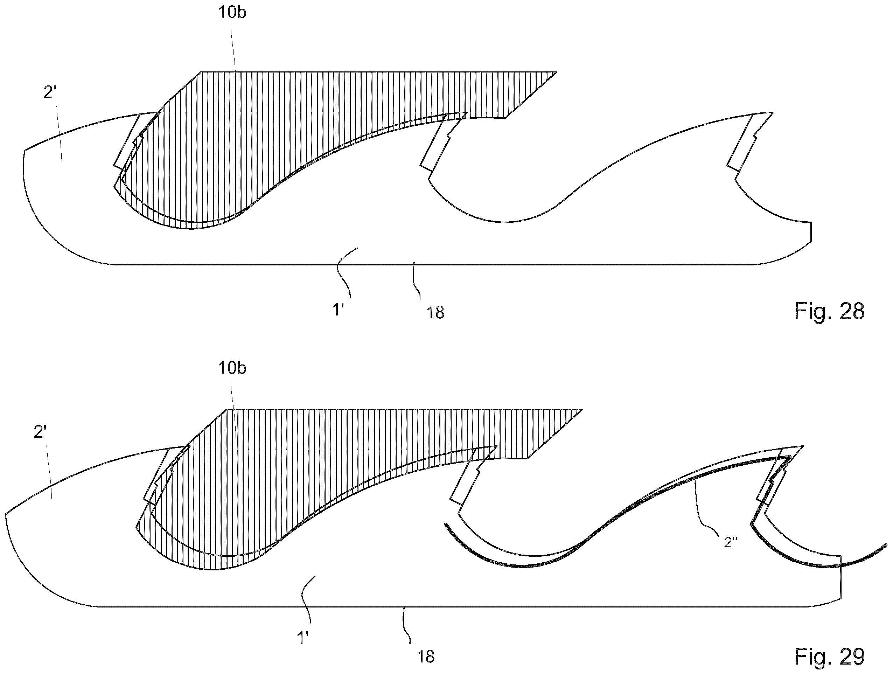

Figs. 28 and 29 show the encircled fragment of figs. 26 and 27 in enlarged scale views. Figs. 28 and 29 correspond to figs. 9 and 10, and to figs. 19 and 20, respectively, and will not be described again.

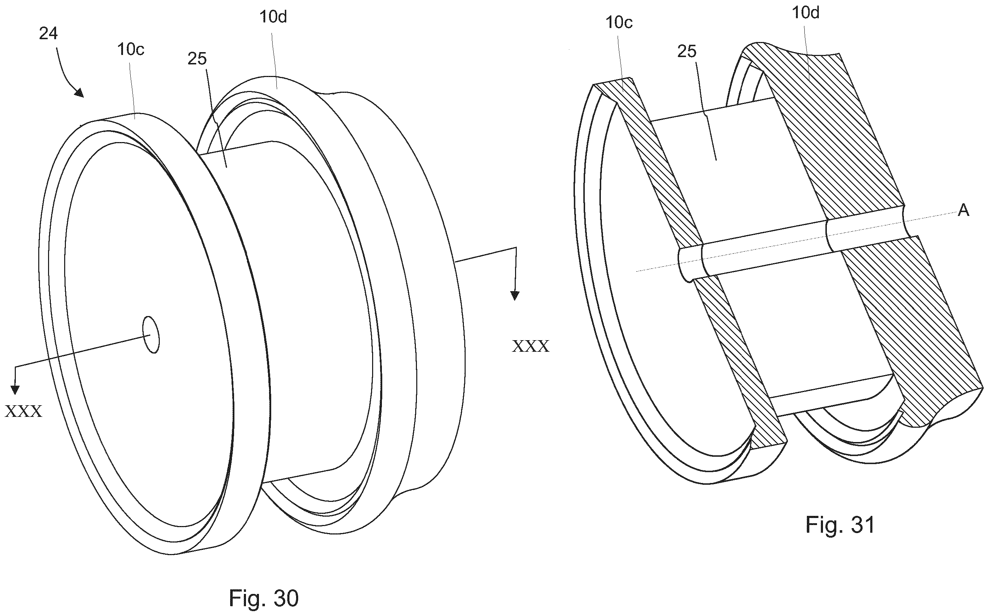

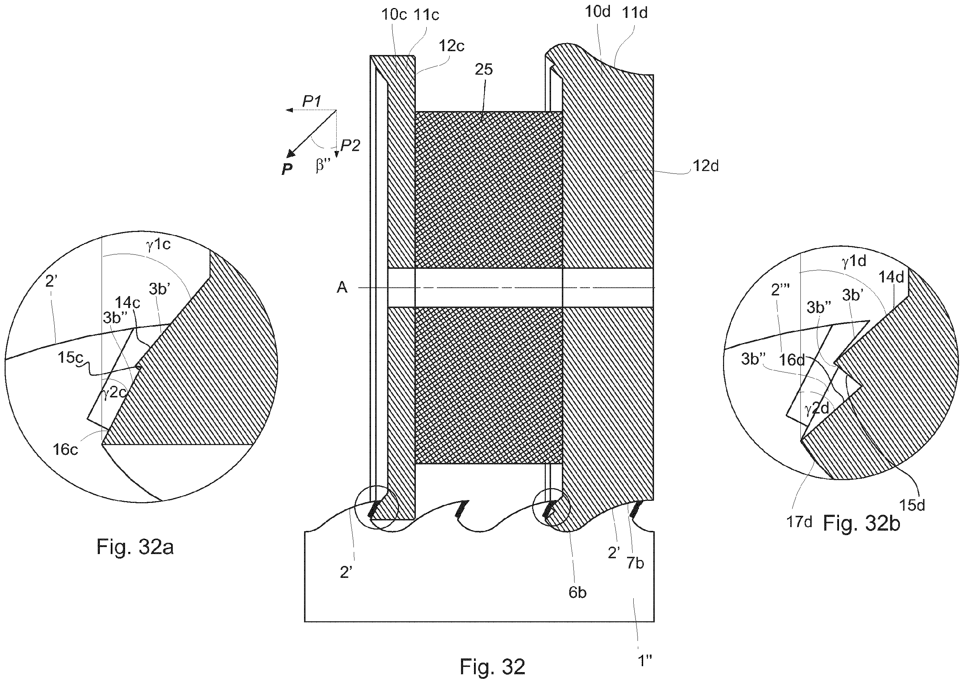

Fig. 30 is a perspective view of a grinding head assembly 24 having two different grinding heads, a fourth embodiment of a grinding head 10c combined with a fifth embodiment of a grinding head 10d, both resembling the upright second embodiment of a grinding head 10a, that can be CNC controlled. The grinding heads 10c;10d are arranged on a common rotation axis A by means of a shaft (not shown), and spaced apart from each other by a spacer 25 at a suitable Teeth Per Inch (TPI) of a band saw blade 1" to be ground, as shown in fig. 32. Emphasize is made that plural grinding heads, same or different, can be arranged in similar extension of each other to grind many teeth in one single step to thereby shorten the duration of grinding a complete band saw blade.

The fourth and fifth embodiments of grinding heads 10c;10d are designed for profile sharpening different parts of the teeth 2' of the first embodiment of a band saw blade 1' to obtain the same tooth profile as described for the second embodiment of a method according to the present invention in relation to figs. 11 - 20, using said second embodiment of a method. For parts having same function same reference numerals are used as for the first embodiment of a method according to the present invention with the second embodiment of a grinding head 10a, with the exception that the annotations "a" has been replaced with the respective annotations "c" or "d". For like part same reference numerals are used

Fig. 31 is a sectional perspective view taken along line XXX - XXX in fig. 30. The spacing obtained by spacer 25 between the grinding heads 10c;10d matches the distance between adjacent teeth 2‴ of the band saw blade 1" to be sharpened. The grinding head assembly 24 is rotated by means of a shaft and displaced in direction ***P*** in a manner similar to the manner described in relation to the second embodiment of a method according to the present invention, thus in relation to figs. 11 - 20.

Fig. 32a is an enlarged scale view of the encircled detail to the left in fig. 32 of the fourth embodiment of a grinding head 10c in step c1) with the exception that the black color of the hard material tipping 9 has been left out for illustrative purpose. Fig. 32b is a similar enlarged scale view of the encircled detail to the right in fig. 32 of the fifth embodiment of a grinding head 10d in step c1).

These enlarged scale views illustrates the differences between the grinding angles γ1c; γ2c of the fourth embodiment of a grinding head 10c, and of the grinding angles γ1d; γ2d of the fifth embodiment of a grinding head 10d, respectively.

In fig. 32a the front grinding face 14c, which is at a first grinding angle γ1c = α1, grinds the first tooth face part 3b'. The outmost annular grinding rim 16c, which is at a second grinding angle γ2c = α2, grinds the second tooth face part 3b'', however the intermediate step 3b''' is free of grinding contact with the annular grinding part 15c of the fourth embodiment grinding head 10c and cannot be ground by it, nor can it grind the gullet 6b and the tooth back 7b. The intermediate step 3b''', the gullet 6b and the tooth back 7b are however all ground subsequently by the fifth embodiment of a grinding head 10d, as seen in fig. 32b.

The fifth embodiment of a grinding head 10d has a front grinding face 14d, which is at a first grinding angle γ1d > γ1c so that it does not grind the first tooth face part 3b', and an outmost annular grinding rim 16d, which is at a second grinding angle γ2d > γ2c, so that it does not grind the second tooth face part 3b'', as such grindings already has been done by the fourth embodiment of a grinding head 10c. The annular grinding part 15d is wide and angled to grind and sharpen the intermediate step 3b''', when the grinding heads 10c;10d are displaced in common in steps c2) and d) along the insertion direction ***P*** into grinding contact with the teeth 2'. The rear annular grinding part 17d of the fifth embodiment of a grinding head 10d also grinds the gullet 6b and the tooth back 7b of the tooth 2'

Movement in direction ***P***(P1,P2) of the grinding heads 10c;10d can, as previously described, be obtained by connecting it to a X-Y table of a CNC machine. In figs. 32,32a,32b the interior corner between the first tooth face part 3b' and the intermediate step 3b''', and the exterior corner between the intermediate step 3b''' and the second tooth face part 3b'' are sharp, not rounded. Rounded interior and/or exterior corners can however easily be ground by providing the fifth embodiment of a grinding head 10d with a complementarily shaped rounded annular grinding part 15d.

The grinding heads 10c;10d are shown as an example of how to make a grinding head assembly and should not be construed as limiting the many options for combining various grinding heads in any order. A grinding head assembly of the present invention may be comprised of separate grinding heads that grind each their part of a tooth. One first grinding head, such as 10d, may e.g. grind some of a first tooth, such as one or more of its tooth face parts that extend in the Y-axis direction roughly, and at the same time fine grind the gullet and the tooth back of said first tooth. At the same time a second subsequent grinding head 10c of the sequence of grinding heads 10c,10d fine grinds the one or more tooth face parts that extend in the Y-axis direction of a tooth that has already been ground by the grinding head 10d, and have been moved further forward. The second grinding head may also grind the gullet and the tooth back roughly to make those parts ready for fine grinding or polishing be the first grinding head 10d. Due to this fractionary grinding method sharpe exterior corners are easily achieved.

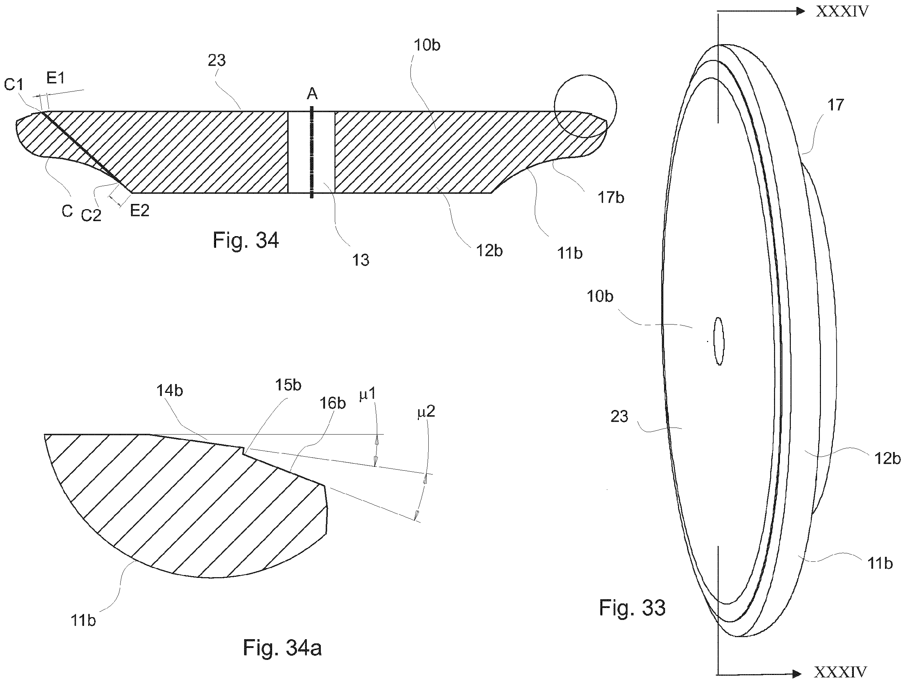

Fig. 33 shows the third embodiment of a grinding head 10b shown and described in relation to figs. 21 - 29, but in perspective seen from the front. The grinding head 10b has a conical or trumpet shaped with a grinding surface curvature C of the grinding surface 12b shaped complementary to the tooth profile to be sharpened.

As illustrated in fig. 34 the length of the grinding surface curvature C of the third embodiment of a grinding head 10b is longer than the part extending from C1 - C2 of said grinding surface curvature C that is in grinding contact with the tooth during grinding. Thereby the grinding surface curvature C of the annular exterior surface 11b is, as seen in e.g. fig. 25, is made to extend a distance E2 beyond the tip edge of the subsequent tooth 2'; and the front grinding face 14b has sufficient extra length E1 to dig into the tooth 2' and create a sharp tooth face 3b without the front plane face 23 gets into grinding contact with said tooth 2'.

The enlarged scale view of fig. 34a shows the encircled detail of fig. 34, as an example of the relationship between various angles of the parts 14b,15b,16b,23 of the annular exterior surface 11b that grinds the tooth face 3b. In the example seen in fig. 34a the angle µ1 between the front plane face 23 and the front grinding face 14b is 8°, and the angle µ2 between the front grinding face 14b and the outmost annular grinding rim 16b is 13°.

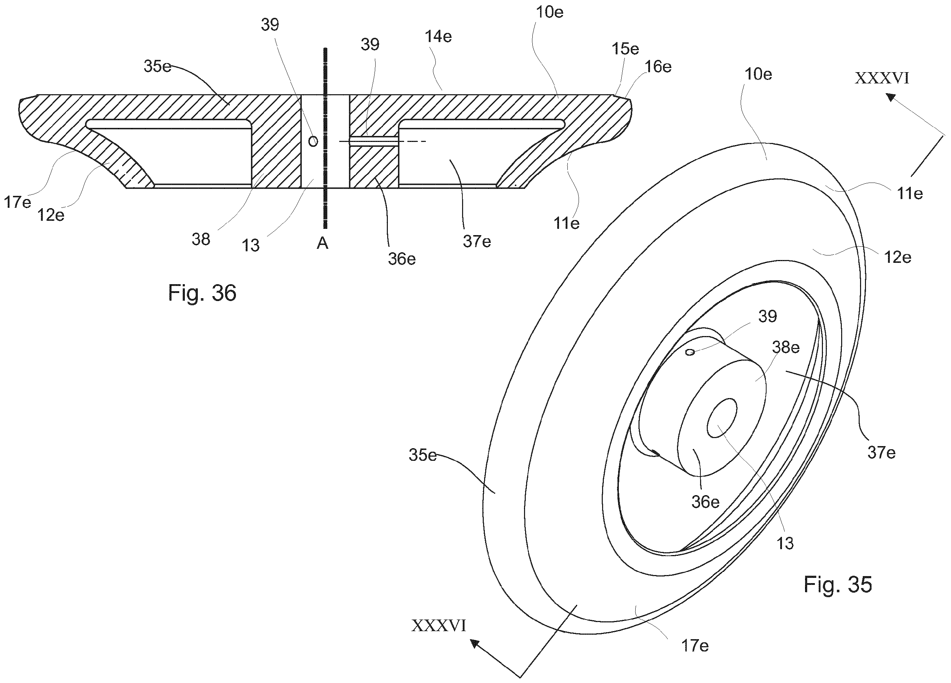

Fig. 35 is a perspective view seen from the back of a sixth embodiment of a grinding head 10e in perspective seen from the back.

Solid grinding heads have high capacity to store thermal energy produced during grinding, resulting in that the band saw blade quickly overheats when ground, which may distort and even damage the material being grinded. Cutting fluid(s), such as liquid coolant(s) is/are applied during the grinding process to dissipate the heat, and prevent the band saw steel from overheating. Using cutting fluids prolongs the lifetime of both the band saw blade and of the grinding head.

The present invention suggests and provides alternative configurations of grinding heads with in-build cooling properties. Use of liquid coolants are know with the art of profile sharpening band saw blades, and are typically applied by flooding, spraying, dripping, misting and brushing the coolant onto the interface between the band saw blade and the profile sharpening tool. The most used methods are high-volume flooding to force a stream of coolant through nozzles directly onto said interface. A sieve can be used to separate grinding debris, and a receptacle can be placed to capture, filter and re-circulate the liquid coolant.

As an example of a grinding head with in-build cooling properties the present invention provides the sixth embodiment of a grinding head 10e seen in figs. 35 and 36. The sixth embodiment of a grinding head 10e resembles the first embodiment of a grinding head 10 shown in figs. 3 - 8, and for like parts same reference numerals are used. The sixth embodiment of a grinding head 10e differs however from the first embodiment of a grinding head 10 in that has a main body 12e, which is configured as a shell member 35e with a shaft coupling 36e through which the shaft hole 13 extends.

The shell member 35e delimits an annular coolant compartment 37e around the shaft coupling 36e. The circumferential wall 38e of the shaft coupling 36e has traversing coolant passages 39, two of which are seen in fig. 36, extending between the shaft hole 13 and the annular coolant compartment 37e, to obtain fluid communication there between, so that coolant can be supplied to the goods of the shell member 35e from the back of the grinding head 10e, and this way dissipate heat from the main body 12e, and thus from the tooth being grinded. Emphasis is made that additional coolant can be supplied in conventional manner if desired.

By making the grinding head 10e with an open cavity in form of an annular coolant compartment 37e, the coolant can be applied inside the grinding head 10e and thereby substantially increase the overall cooling and dissipation of thermal heat developing during grinding. A grinding head of reduced amount of material for storing thermal energy can be designed to dissipate substantially as fast as it is produced. When coolant is forced at high pressure into the annular coolant compartment 37e a coolant vortex is created that throws debris away from the rotating grinding head 10e as it rotates about the axis of the rotation shaft (not shown).

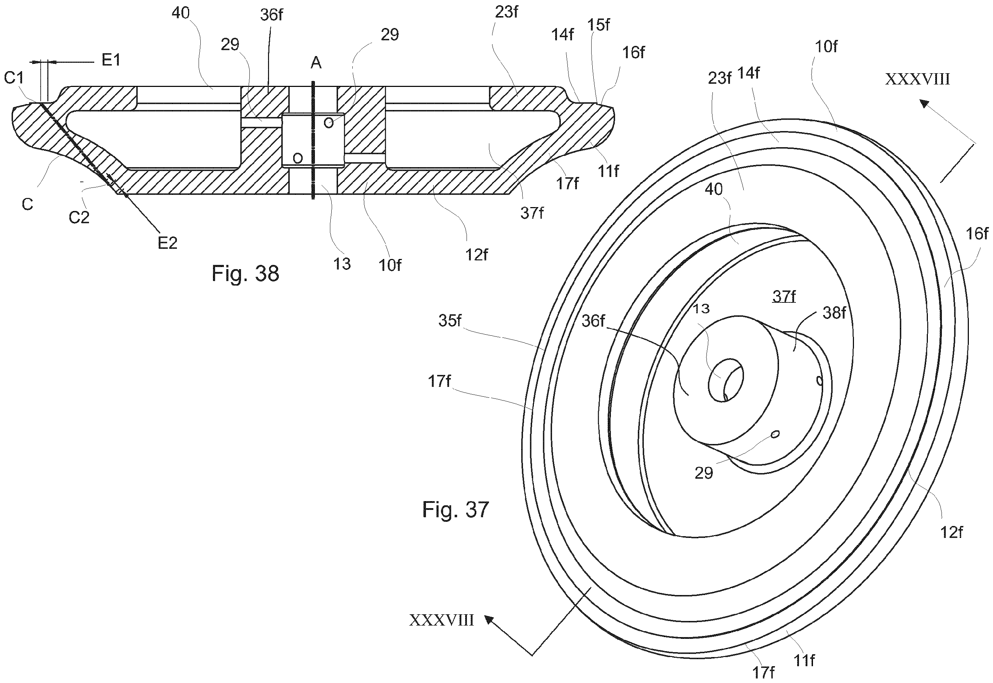

Fig. 37 is a perspective view of a seventh embodiment of a grinding head 10f seen from its front plane. The seventh embodiment of a grinding head 10f is basically structured as the third embodiment of a grinding head 10b seen in figs. 3 -10, but modified to force coolant directly onto the band saw blade during grinding, thus at its front plane face 23f. For parts having same function same reference numerals are used as for the third and seventh embodiments of grinding head 10b;10e, with the exception that the annotation "f" replaces the annotations "b" and "e". For like part same reference numerals are used.

The front plane face 23f protrudes axially from the front grinding face 14f and delimits an annular exit opening 40 for the coolant around the shaft coupling 36f with its coolant passages 29. The main body 12f is configured as a shell member 35f that delimits an annular coolant compartment 37f around that opens into the annular exit opening 40. As the diameter of the annular exit opening 40 is smaller than the largest diameter of the annular coolant compartment 37f of the grinding head 10f will, when the grinding head 10f rotates, act as a nozzle to expel the vortex of coolant supplied via the coolant passages 29, of which four is seen in the sectional view of fig. 38, onto the band saw blade.

This the main body 12f of the seventh embodiment of a grinding head 10f is hollow as the sixth embodiment of a grinding head 10e but in an inverted manner to supply coolant via its front plane face 23f to thereby cool both the band saw blade and the grinding head 10f itself during grinding.

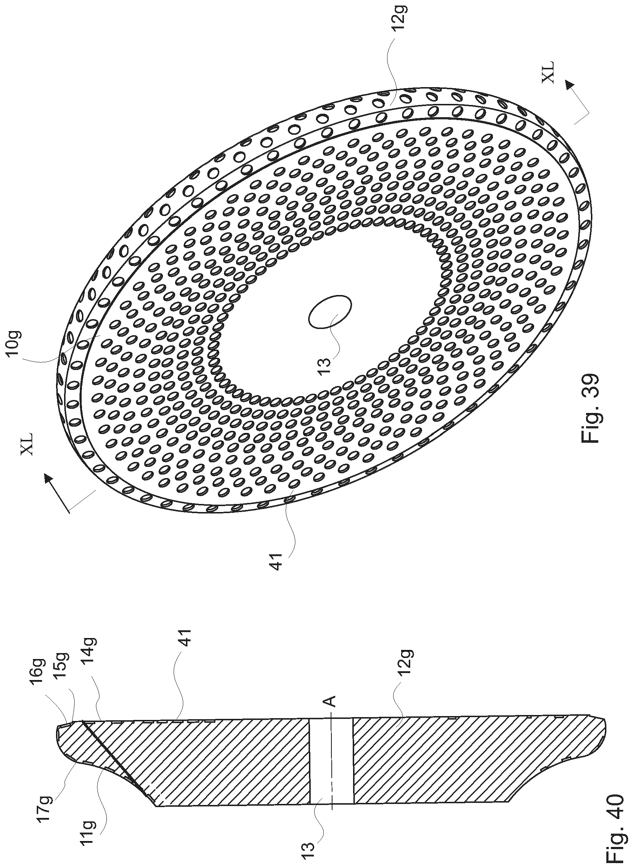

Fig. 39 is a perspective view of an eight embodiment of a grinding head 10g corresponds to the first embodiment of a grinding head 10 and for parts having same function, or being similar to, same reference numerals are used with the exception that the annotation "g" has been added to the reference numerals. For like parts same reference numerals are used. Fig. 40 is a sectional view of fig. 39 taken along line XXXVIII - XXXVIII.

The eight embodiment of a grinding head 10g differs from the first embodiment of a grinding head 10 in that the main body 12g is provided with a plurality of dimples 41 at a part of its surface area, which surface area part includes the parts to get into grinding contact with the band saw blade. During grinding the dimples 41 serve to accommodate coolant, which is forced onto the grinding head 10g in contact with the band saw blade, and to bring coolant along, as well as to transport removed matter away when said dimples are free of contact with the rotating grinding head 10g. The dimples 41 can be arranged symmetrical or asymmetrical, as well as be placed in islands. In the alternative dimples can be replaces with annular tracks, e.g. concentric tracks, or slots. Any shape of small cavity or recess made into the solid main body 12g is within the scope of the present invention. Furthermore dimples can be provided to any of the main bodies described herein, including main bodies formed as shell members 35e;35f.

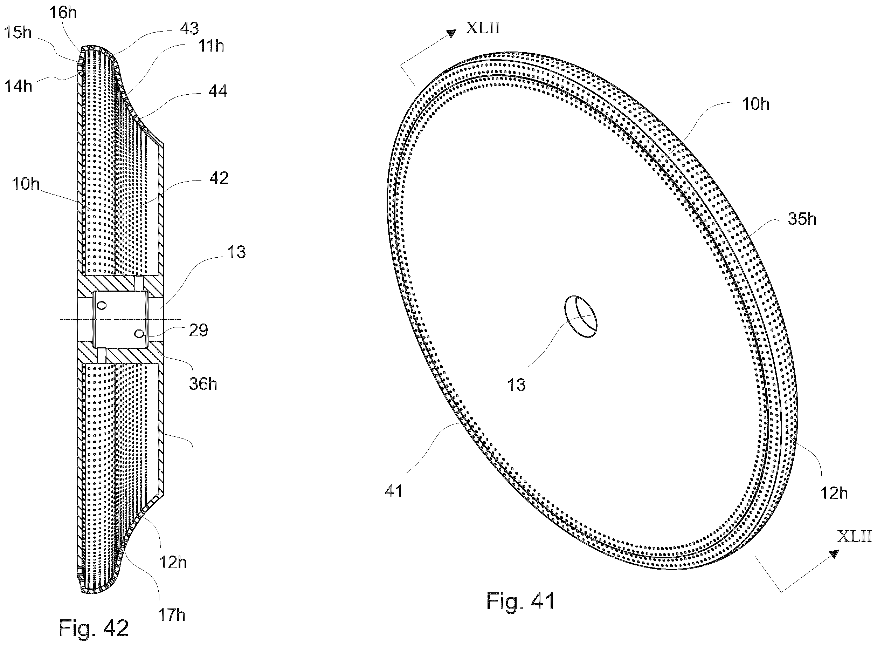

Fig. 41 is a perspective view of a ninth embodiment of a grinding head 10h seen from the front. The ninth embodiment of a grinding head 10h has an exterior outline that corresponds to the outline of the sixth embodiment of a grinding head 10e. For parts having same function, or being similar to, same reference numerals are used with the exception that the annotation "e" has been replaced with the annotation **"**h**".** For like parts same reference numerals are used.

The main body 12h is defined by a shell member 35h that delimits an enclosed annular chamber 42 around the shaft coupling 36h. The shaft coupling 36h has coolant passages 29 in fluid communication with the enclosed annular chamber 42. As seen best in the sectional view of fig. 42, the wall 43 of the shell member 35h has a plurality of through passages 44 that allows coolant to pass through and onto the band saw blade when the grinding head 10h rotates.

The features of the above described and discussed embodiments of grinding heads can be combined to achieve further embodiments. For example grinding heads can be arranged in grinding head assemblies in any desired order, wherein each grinding head of a grinding head assembly grinds different parts of the tooth of the band saw blade. Such grinding head can be arranged in any desired order or number.

Accordingly: The present invention does encompass embodiments and variations of methods and grinding heads that differ from the exemplary configurations discussed above and shown in the figures. Thus within the scope of the present invention the figures should not be seen as limiting, and modifications of the shown and discussed tooth profiles, grinding heads and methods are encompassed.

## Claims

1. A method of profile sharpening at least a part of one tooth (2;2';2") of the teeth (2;2';2") of a band saw blade (1; 1';1''), comprising the steps of
a) providing a grinding tool having at least one grinding head (10;10a;10b;10c;10d;10e;10f;10g;10h) configured with a grinding profile with at least one grinding surface part (14,15,16,17; 14a,15a,16a,17a; 14b,15b,16b,17b; 14c,15c,16c,17c; 14d,15d,16d,17d; 14e,15e,16e,17e; 14g,15g,16g,17g; 14h,15h,16h,17h),
b) arranging the rotation axis of the at least one grinding head (10;10a;10b;10c;10d;10e;10f;10g;10h) at an angle (β) in relation to a base line (18) of the band saw blade (1; 1';1"),
c) selecting an insertion direction **(*P*)** of the grinding head (10;10a;10b;10c;10d;10e;10f;10g;10h), which insertion direction **(*P*)** provides an insertion angle (β';β") of the grinding head (10;10a;10b;10c;10d;10e;10f;10g;10h) in relation to a line perpendicular to the base line (18) of the band saw blade (1;1';1''), which insertion angle (β';β'') is different from at least one hook angle (α;α1;α2) of the tooth face (3a;3b) of the at least one tooth (2;2';2''), and displacing the at least one grinding head (10;10a;10b;10c;10d;10e;10f;10g;10h), either along the insertion direction or perpendicular to the width of the band saw blade, into a space between two adjacent teeth (2;2';2'') of the band saw blade (1;1';1'') to achieve a grinding start position, and
d) operating the grinding tool to grind at least the tooth face (3a;3b) of the at least one tooth (2;2';2") by continuously displacing the grinding head (10;10a;10b;10c;10d;10e;10f;10g;10h) in the insertion direction **(*P*).**

2. A method of profile sharpening according to claim 1, wherein the profile sharpening is made in a single step without altering the insertion direction **(*P*).**

3. A method of profile sharpening according to any of claims 1 or 2, wherein the grinding tool is coupled to a CNC machine.

4. A method of profile sharpening according to any of claims 1, 2 or 3 wherein the insertion direction **(*P*)** is a straight line or has a curvature.

5. A method of profile sharpening according to any of the preceding claims, wherein step d) comprises sharpening the tooth face (3a;3b), a gullet (6a;6b) of the tooth (2;2';2"), and a tooth back (7a;7b) of the subsequent tooth (2;2';2'').

6. A method of profile sharpening teeth (2;2';2'') of a band saw blade (1;1';1'') according to any of the preceding claims, wherein the at least one grinding head (10;10a;10b;10c;10d;10e;10f;10g;10h) is put into rotation prior to, during, or once said grinding head (10;10a;10b;10c;10d;10e;10f;10g;10h) has been fully inserted into the space between adjacent teeth (2;2';2'') of the band saw blade (1;1';1'').

7. A method of profile sharpening teeth (2') of a band saw blade (1;1';1'') according to any of the preceding claims, wherein the grinding tool comprises plural grinding heads (10c;10d) arranged spaced apart on a common rotation axis (A), and with a spacing that matches the distance between adjacent teeth (2;2';2") of the band saw blade (1;1';1'') to be sharpened.

8. A method of profile sharpening teeth (2') of a band saw blade (1;1';1'') according to claim 7, wherein the plural grinding heads (10c;10d) are the same or different and selected according to the outline of the sequence of teeth (2;2';2") to be sharpened.

9. A method of profile sharpening teeth (2;2';2") of a band saw blade (1;1';1'') according to any of the preceding claims, wherein the at least one grinding head grinding surface part (14,15,16,17; 14a,15a,16a,17a; 14b,15b,16b,17b; 14c,15c,16c,17c; 14d,15d,16d,17d; 14e,15e,16e,17e; 14g,15g,16g,17g; 14h,15h,16h,17h) is configured complementary to at least a part of the tooth face (3a;3b) to be provided to the tooth (2;2';2").

10. A method of profile sharpening teeth (2;2';2") of a band saw blade (1;1';1'') according to any of the preceding claims, wherein the tooth face (3a;3b) of the at least one tooth (2;2';2") to be grinded has
- at least a first tooth face part (3b') with a first hook angle (α1),
and optionally
- a second tooth face part (3b") with a second hook angle (α2) being different from the first hook angle (α1),
optionally
- the second tooth face part (3b'') extends into the first tooth face part (3b') via an intermediate step (3b‴).

11. A method of profile sharpening teeth (2;2';2'') of a band saw blade (1;1';1'') according to any of the preceding claims, wherein step c) comprises the partial steps of
c1) inserting the at least one grinding head (10;10a;10b;10c;10d;10e;10f;10g;10h) in a closest non-grinding contact with the at least one tooth (2;2';2") to be grinded, and
c2) advancing the at least one grinding head (10;10a;10b;10c;10d;10e;10f;10g;10h) further in the insertion direction **(*P*)** to apply a grinding force to the tooth face (3a;3b).

12. A method of profile sharpening teeth (2;2';2") of a band saw blade (1;1';1'') according to any of the preceding claims, which method is computer controlled or computer-assisted.

13. A method of profile sharpening teeth (2;2';2") of a band saw blade (1;1';1'') according to any of the preceding claims, which method implements a vision system, preferably a camera vision system.

14. A grinding head (10;10a;10b;10c;10d;10e;10f;10g;10h) configured with a grinding profile with at least one grinding surface part (14,15,16,17; 14a,15a,16a,17a; 14b,15b,16b,17b; 14c,15c,16c,17c; 14d,15d,16d,17d; 14e,15e,16e,17e; 14g,15g,16g,17g; 14h,15h,16h,17h) adapted for grinding at least one tooth (2;2';2'') of a band saw blade (1;1';1''), which at least one tooth (2;2';2'') has a least one hook angle (α;α1;α2), wherein the grinding head (10;10a;10b;10c;10d;10e;10f;10g;10h) has a main body (12;12a;12b;12c;12d;12e;12f;12g;12h) wherein at least a part of the grinding profile is shaped complementary to the tooth profile to be obtained, optionally the main body (12;12a;12b;12c;12d;12e;12f;12g;12h) is solid or is configured as a hollow shell member (35e;35f;35h).

15. A grinding head (10;10a;10b;10c;10d;10e;10f;10g;10h) according to claim 14, wherein an annular exterior surface (11;11a;11b;11c;11d;11e;11f;11g;11h) of a main body (12;12a;12b;12c;12d;12e;12f;12g;12h) of the grinding head (10;10a;10b;10c;10d;10e;10f;10g;10h) has one or more of
- a front grinding face (14;14a;14b;14c;14d;14e;14f;14g;14h) adapted for grinding a first tooth face part (3b') of the at least one tooth (2;2';2") of a band saw blade (1;1';1''),
- an outmost annular grinding rim (16;16a;16b;16c;16d;16e;16f;16g;16h) for grinding the second tooth face part (3b'') of the at least one tooth (2;2';2'') of a band saw blade (1;1';1''),
- an annular grinding part (15;15a;15b;15c;15d;15e;15f;15g;15h) for grinding an intermediate step (3b‴) of the at least one tooth (2;2';2") of a band saw blade (1;1';1''), and
- a rear annular grinding part 17;17a;17b;17c;17d;17e;17f;17g;17h) for grinding the gullet (6a;6b), and/or the tooth back (7a;7b) of a subsequent tooth (2;2';2") of the teeth of the band saw blade (1;1';1'').

16. A grinding head (10e;10f;10g;10h) according to any of claims 14 or 15, wherein said grinding head (10e;10f;10g;10h) has integral cooling properties.

17. A grinding head (10e;10f;10h) according to any of claims 14, 15 or 16, wherein the shell member (35e;35f;35h) delimits an annular coolant compartment (37e;37f;37h) around a shaft coupling (36e;36f;36h), preferably the annular coolant compartment (37e;37f;37h) is configured for receiving a coolant via coolant passages (29;39) that traverse a circumferential wall (38e;38f;38h) of the shaft coupling (36e;36f;36h).

18. A grinding head (10;10a;10b;10c;10d;10e;10f;10g;10h) according to claim 17, wherein the annular coolant compartment (37e;37f;37h) is open at the front or at the back of the grinding head (10;10a;10b;10c;10d;10e;10f;10g;10h).

19. A grinding head (10g) according to any of the preceding claims 14 - 18, wherein at least a part of an exterior surfaces of the main body (12g) has a plurality of dimples (41), recesses, dents or cavities.

20. A grinding head (10h) according to any of the preceding claims 14 - 19, wherein the shell member (35h) has a plurality of through holes (41).

21. A profile sharpening machine comprising the grinding head (10;10a;10b;10c;10d;10e;10f;10g;10h) according to any of the preceding claims 14 - 20 for carrying out the method according to any of the preceding claims 1 - 13.
